# EUROPEAN PATENT APPLICATION

(11) **EP 0 835 018 A1**
(43) Date of publication of application: **08.04.1998**
(21) Application number: 97116085.8
(22) Date of filing: 16.09.1997
(51) Int. Cl.: H04M 11/08

(54) **Communication terminal device and communication method**

(30) Priority: 17.09.1996 JP 244598/96
(71) Applicant: Murata Kikai Kabushiki Kaisha, Minami-ku, Kyoto-shi, Kyoto (JP)
(72) Inventor: Kumano, Toshiya, Murata Kikai Shataku B-606, Uji-shi, Kyoto (JP); Yasumoto, Hiroyuki, Kagamigahara-shi, Gifu (JP)
(74) Representative: Liedl, Christine, Dipl.-Chem.

(57) **Abstract**

When a communication terminal device (T) wants to communicate with a remote terminal over a computer network, it first sends an NSC signal to a host (H). The host holds information about procedures for connection with providers. The NSC signal is a facsimile control signal and carries information indicative of a particular provider, through which provider the network communication should be performed. Upon receiving the NSC signal, the host detects presence/absence of a transmission request for connection procedure information for the designated provider. If such a request is found, the host (H) adds the requested information to an NSS signal and sends it to the communication terminal device (T). The communication terminal device receives this information, memorizes it in an information table (T1) of the RAM (7) and executes a log-in procedure based on this memorized information such that it can communicate with the desired remote terminal through the desired provider.

## Description

The present invention relates to a communication terminal device and communication method able to connect to a computer communication network such as the internet or the like.

Recently, the use of computer communication networks such as the internet or the like is becoming more widespread. If this computer communication network is used, communication with a remote terminal (even with a foreign terminal) is possible by only bearing communication costs needed between the user and the nearest provider (the provider is a company providing contact to the computer network). Therefore, the costs required for, in particular, long distance communication is greatly reduced by taking advantage of such a computer network.

In order to connect to a computer network, it is necessary to execute predetermined connection procedures with a provider (Log-in procedures). These log-in procedures involve exchange of predetermined commands with the provider and transmission of a user password and the like so that the procedure execution is time consuming and troublesome. Generally, the information relating to the connection procedures is prerecorded in a memory of the user's communication terminal device, and when the user wants to communicate with a remote terminal, the connection procedures are automatically executed based on the prerecorded information (automatic logging-in).

However, it is necessary for a user to perform a series of operations in order to record the connection procedures information at least the first time and these operations are very troublesome. Moreover, as the fact that these connection procedures differ for each provider is common, the recording operations for the user who is using many providers are time consuming. Furthermore, when changes to the connection procedure arise with specification changes at the provider, the recorded connection procedure information needs to be changed at the user side and it is troublesome.

In order to solve the aforementioned problems, it is an object of the present invention to propose a communication terminal device and communication method that is capable of automatically recording the connection procedure information for connection to a computer network and moreover, even if there are connection procedure changes, that is capable of easily rewriting the old connection procedure information to new one.

In order to achieve the aforementioned object, a first aspect of the present invention provides improvement of a communication terminal device capable of communicating along a computer network. Specifically, it comprises a connection procedure information reception means for receiving from an information source (i.e., host) connection procedure information relating to procedures for connection to the computer network, and a rewritable memory means for memorizing the received connection procedure information. The connection procedure information is automatically memorized in the rewritable memory means.

The communication terminal device may further include a request signal transmission means that transmits to the information source a signal requesting transmission of the connection procedure information. The connection procedure information reception means receives the connection procedure information transmitted in response to that request. Accordingly, the connection procedure information is received only when necessary, i.e., only when there is a request from the communication terminal device.

A second aspect of the present invention provides a unique communication method using a communication terminal device and a host over a computer network. The host memorizes the newest connection procedure information relating to the procedures for connection to the computer network. The method includes the steps of causing the communication terminal device to request the host transmission of connection procedure information, causing the host to transmit the connection procedure information to the communication terminal device upon the request, causing the communication terminal device to receive this connection procedure information and causing the terminal device to memorize it in a rewritable memory.

The present invention is also directed to a recording medium for storing various programs to execute the above method. One or more computers may execute the steps of the method according to these programs. The recording medium may be any suitable device which is able to record computer programs such as a readable semiconductor recording device, a recording medium of a magnetic recording device, a recording medium of a photo-magnetic recording device or the like. In actuality, the recording medium may be a floppy disk, hard disk, optical disk, magneto-optical disk, phase change disk, magnetic tape or the like.

No password may be included in the connection procedure information transmitted from the host.
- Figure 1: is a block diagram of a communication terminal device according to the present invention;
- Figure 2: is a diagram showing major parts involved in processing of data in the communication terminal device shown in Figure 1;
- Figure 3: illustrates a connection procedure information table memorized in the communication terminal device shown in Figure 1;
- Figure 4: is a block diagram of a host connected with the communication terminal device shown in Figure 1;
- Figure 5: is a flow chart showing the operations of the communication terminal device of Figure 1; and
- Figure 6: is a flow chart showing the operations of the host shown in Figure 4.

Now, a first embodiment realized on the present invention will be described using the accompanying drawing. It should be noted that a communication terminal device of the present embodiment transmits image data obtained by scanning of a document as electronic mail and prints out received electronic mail on recording paper as image data. The communication terminal device is also provided with a function to communicate with the internet in addition to G3 and G4 facsimile communication functions. The internet is used as the computer network in this embodiment. Reception of connection procedure information from a host is performed by a line exchange method.

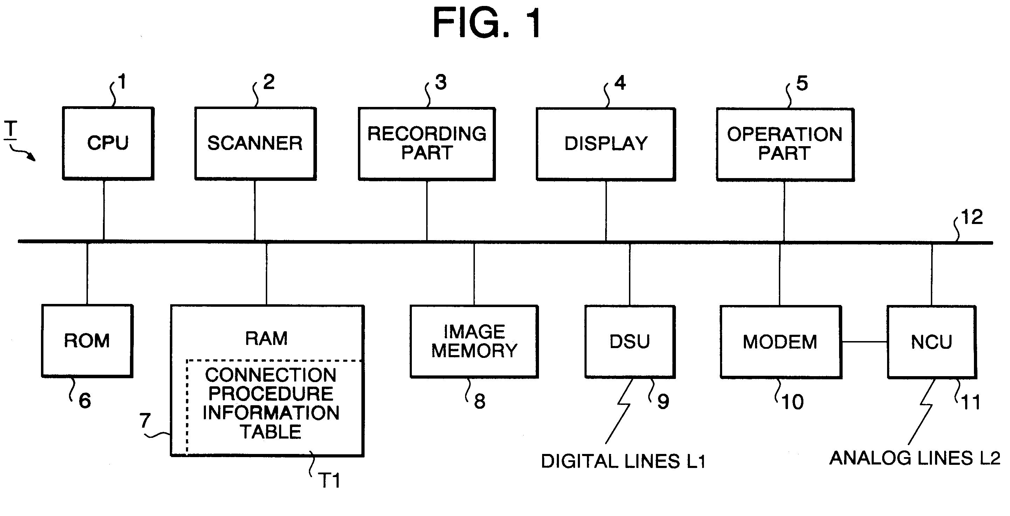

Referring to Figure 1, CPU 1 controls each part of the communication terminal device T via a bus 12 and runs softwares for coding, decoding, image conversion, binary text conversion, mail editing, communication procedures and the like which will be described later.

A scanner 2 scans an image on a document by a CCD (Charge Coupled Device) and outputs it as bi-level (i.e., white and black) image data. A recording part 3 is provided with a printer such as a laser xerographic printer and records on recording paper image data received from a remote G3 of G4 facsimile device or the internet.

A display 4 comprising a LCD (Liquid Crystal Display) or the like indicates an operating state of the communication terminal device T or image data.

An operation part 5 is provided with various function keys necessary for operations of the communication terminal device T such as a numeric key pad, speed dial key, one-touch dial key and the like. The numeric key pad and one-touch dial key may be used to input characters such as letters of the alphabet.

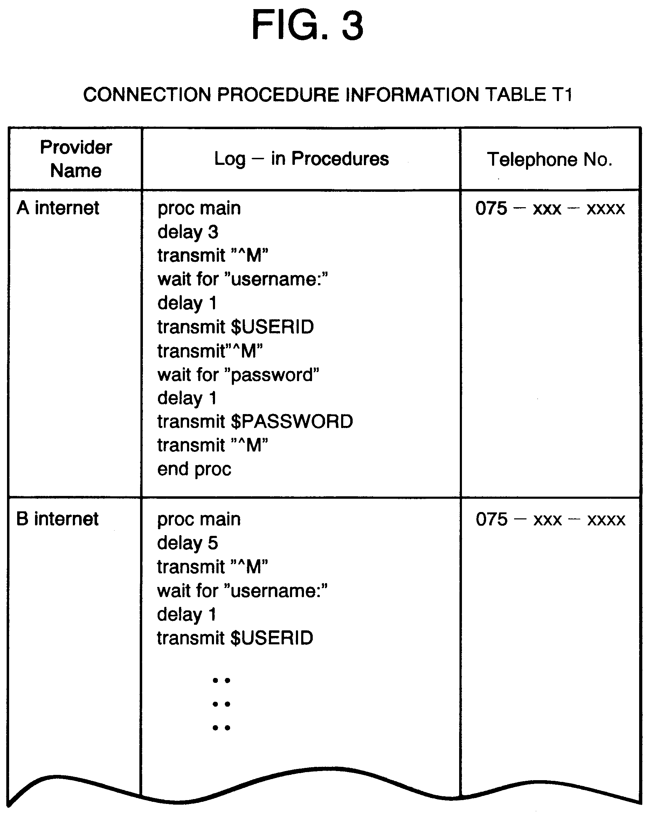

ROM (Read Only Memory) 6 stores the programs necessary for operations of the communication terminal device T. RAM (Random Access Memory) 7 comprises SRAM (Static Random Access Memory) or flash memory (Flash EEPROM; Flash Electrically Erasable Programmable Read Only Memory) or the like as a rewritable memory means and temporarily memorizes data generated upon execution of the programs. RAM 7 also memorizes a user password of the communication terminal device T and a connection procedure information table T1 (see Figure 3: will be described later).

An image memory 8 comprises DRAM (Dynamic Random Access Memory) or the like and temporarily memorizes the image data which is to be transmitted or the image data received.

DSU (Digital Service Unit) 9 connects to digital lines L1. The data on the digital lines L1 is sent in accordance with a baseband transmission method. Accordingly, the DSU 9 converts the transmission data (or a digital signal) to a voltage change and sends it along the digital lines L1. When the DSU 9 receives the data from a remote facsimile, it converts the voltage change of the digital lines L1 into a digital signal. Furthermore, the DSU 9 is provided with functions that generate and detect each type of facsimile control signal.

Modem 10 is for carrying out modulation and demodulation of the transmission and reception data and is provided with data modem functions as well as conventional fax modem functions. NCU (Network Control Unit) 11 controls line connection to and disconnection from the analog lines L2 and is also provided with functions that transmit a dial pulse corresponding to a third party's fax number and detect an incoming call.

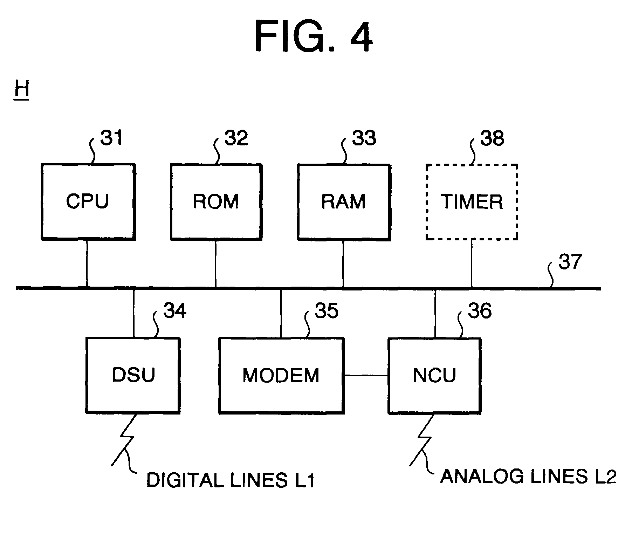

In the present embodiment, the means for receiving connection procedure information from the host (Figure 4) and the means for transmitting a request signal to the host H are constituted by the CPU 1, ROM 6, RAM 7, DSU 9, modem 10 and NCU 11.

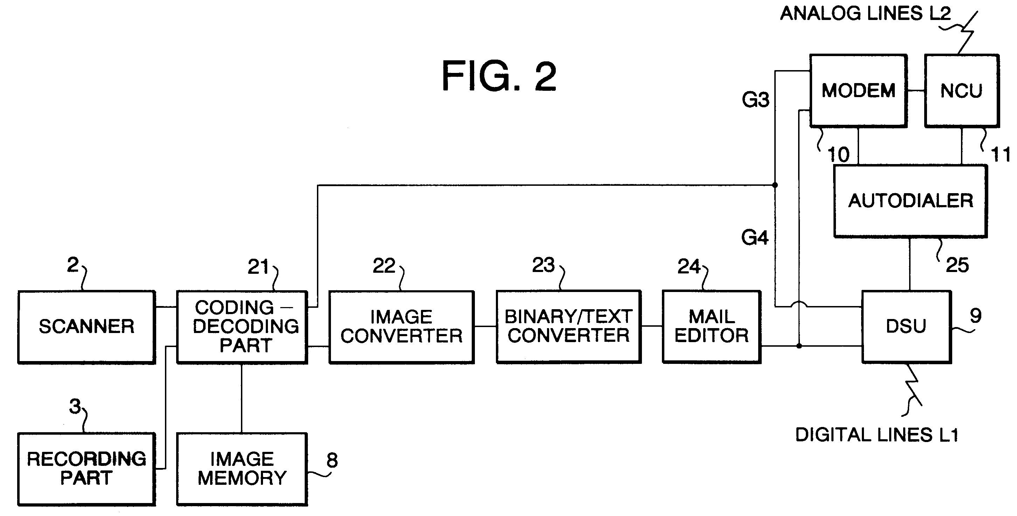

Figure 2 shows major parts used for processing of data inside the communication terminal device T of the present embodiment. It should be noted that in the same drawing, a coding/decoding part 21, image conversion part 22, binary text conversion part 23, mail editor 24 and auto-dialer 25 are parts having functions which the CPU 1 executes based on the programs memorized in the ROM 6.

A coding/decoding part 21 codes and decodes the image data by a coding method such as MH (Modified Huffman) method, MR (Modified Read) method, MMR (Modified MR) method or the like. Hereafter the image data coded by these coding methods will be called "G3 format image data". The image memory 8 memorizes this G3 format image data.

An image conversion part 22 converts the G3 format image data at the time of transmission into TIFF (Tag Image File Format) which is a general image format used by computers and at the time of reception converts TIFF into G3 format image data. TIFF is a standard format for image files proposed by Aldus, Inc. of America (Currently, taken over by Adobe Systems, Inc.). It does not define the standard data format but uses the properties or attributes of image data as TAG information. Due to this, when using the TIFF format, the format of the data may be recognized by reading the standardized TAG information written in a first couple of hundreds of bytes of the image file.

Furthermore, TIFF defines various classes: not only a class for bi-level (i.e., white and black) images but also classes for gray scale images as well as full color images. Class F which is one of those classes defines G3 format image data. Accordingly, the G3 format image data can be converted to TIFF data by attaching TIFF header information of Class F to the start of the G3 format image data. Hereafter, the G3 format image data to which has been added TIFF header information of Class F is called "TIFF image data".

The binary/text conversion part 23 converts the binary data into text data at times of transmission and converts the text data into binary data at times of reception. As there are computers in the internet that are unable to handle binary data electronic mail, it is necessary to first convert the binary data to the text data in order to reliably deliver electronic mail to a third party, when binary data such as TIFF image data is transmitted. Text data handled by the internet is defined as a 7-bit code in RFC (Request for Comments) 822, i.e., a document published by IETF (Internet Engineering Task Force).

The binary text converter part 23 performs conversion of the data using a MIME (Multipurpose Internet Mail Extensions) base 64 or the like. According to this base 64, the 6-bit binary data is converted to text data by being replaced with one of 64 characters (Large and small letters of the alphabet, numerals, +, /) and padding (=). It should be noted that MIME is defined by RFC 1521 (which defines the MIME header), RFC 1522 and RFC 1590.

The mail editor 24 attaches mail header information to the TIFF image data (the TIFF image data has been converted to text data at this point) and edits it to electronic mail format at times of transmission and, at times of reception, removes the mail header information from the data in the electronic mail format and only takes out the TIFF image data which has been converted to text data. As the attachment of predetermined header information to electronic mail of the internet is regulated, items Such as "From:" (sender), "To:" (recipient), "Subject:", "Cc:" (multiple addressees), "Date:" and the like are attached to the beginning of the TIFF image data at times of transmission.

An autodialer 25 sends the telephone number data of the third party to the DSU 9, modem 10 or NCU 11 which are able to call the telephone number read out from the connection procedure information table T1 in the RAM 7.

Next, the connection procedure information table T1 memorized in the RAM 7 will be described using Figure 3.

As shown in Figure 3, information showing a particular provider name, log-in procedure information for this provider (in short, information relating to the procedures for connection to a particular internet via this provider) and telephone number information of the provider are memorized in the connection procedure information table T1. Accordingly, the CPU 1 (Figure 1) automatically executes log-in procedures based on the data in this connection procedure information table T1. As a result, the communication terminal device T connects to the desired internet via the provider and enables the communication of electronic mail over the internet.

Next, the host H will be described with reference to Figure 4.

As shown in Figure 4, the host H is provided with a DSU 34, modem 35 and NCU 36 similar to the communication terminal device T and is capable of G3 and G4 facsimile communication.

CPU 31 not only controls each part of the host H via a bus 37 but also executes the programs and the like for transmission of connection procedure information to the communication terminal device T. ROM 32 memorizes the programs necessary for the operations of the host H. RAM 33 is comprised of SRAM, a flash memory or the like and temporarily memorizes the data generated during execution of the programs. Furthermore, the newest connection procedure information (log-in procedure information) for a plurality of providers is memorized in the RAM 33. This connection procedure information is always updated with the newest connection procedure information by the operator of the service center (a facility in which the host H is located). DSU (Digital Service Unit) 34 is an interface unit for transmission and reception of data to and from digital lines L1. Modem 35 is a modulation/demodulation device for transmission and reception of data to and from analog lines L2. NCU (Network Control Unit) 36 connects the analog lines L2 with the modem 35. It also converts dialing information from a dialer into a dial pulse. The digital lines L1 is a digital circuit such as ISDN (Integrated Service Digital Network). The analog lines L2 is an analog telephone circuit such as PSTN (Public Switched Telephone Network).

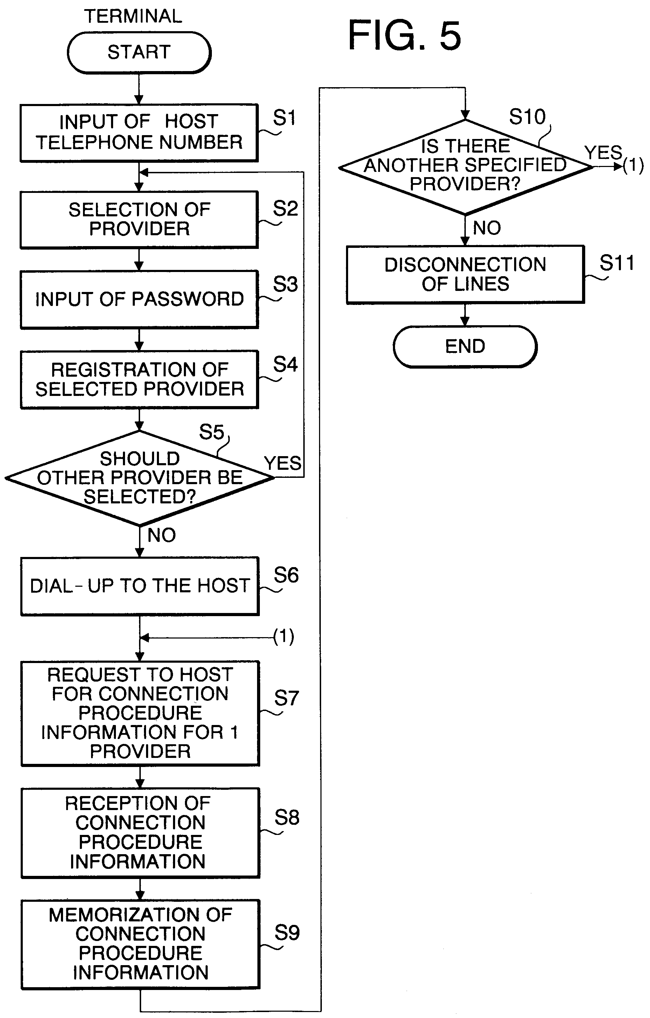

Next, the operations of when the connection procedure information of the host H is received and recorded at the communication terminal device T of the present embodiment will be described using the flowchart shown in Figure 5. These operations are performed by the CPU 1 based on the programs memorized in the ROM 6.

As shown in Figure 5, the telephone number of the host is entered by the user using a key pad or the like of the operation part 5 (S1). Next, one provider from among the plurality of providers to which the user is contracted is selected by the user using the key pad or the like of the operation part 5 (S2) and the password is entered (S3). It should be noted here that when the entered password is the same as the password prememorized in the RAM 7, the processing proceeds to the next step. If the passwords are not the same, the processing is not advanced to the next step until they coincide with each other.

Next, the provider selected at S2 is recorded in the RAM 7 (S4) and in continuance, a determination (S5) is made of whether a provider other than that selected at the previous step should be selected. It should be noted that S1 to S5 are performed in accordance with instruction screens or similar shown in the display part 4. For example, an instruction screen for a recording operation is displayed in the display part 4 by a key operation of the operation part 5. In accordance with this instruction screen, the telephone number, provider name and password are entered. After the password is entered, a message such as "Would you like to choose another provider? YES...1, NO...0" is displayed in the display part 4. If the "1" key is pressed, the processing returns to S2 and if a "0" key is pressed, the processing advances to S6. In short, when another provider is needed, the selection of another provider is performed by returning to S2. When no other provider is selected, the telephone number of the host H entered at S1 is dialed (S6).

Once a line has been established to the host H, a transmission request for connection procedure information for the first selected provider is made to the host H (S7). It should be noted that this transmission request is performed using a facsimile control procedure signal for example. In actuality, information indicative of the provider is included in the NSC signal (Non-Standard Facilities Command) and this NSC signal is transmitted to the host from the communication terminal device T as a transmission request signal for connection procedure information. In response to this NSC signal, an NSS signal (Non-Standard Facilities Set-up) carrying the connection procedure information for the designated provider is transmitted from the host H. This NSS signal is also a facsimile control signal. When the connection procedure information is received (S8), it is stored in the connection procedure information table T1 of the RAM 7 (S9). In short, the information in a particular area of the connection procedure information table T1 corresponding to the provider designated by the NSC signal is rewritten with the newest connection procedure information. It should be noted that when the provider specified by the NSC signal is a new provider and there is no information relating to that new provider in the connection procedure information table T1, the received connection procedure information as well as the provider name is written into a vacant area of the connection procedure information table T1. The user password necessary for execution of log-in procedures between the provider and the communication terminal device T is not included in the connection procedure information from the host H. Accordingly, this password is registered separately by a key operation of the operation part 5 of the device T by the user himself.

Next, a determination (S10) is performed of whether connection with another provider is desired, in short, whether another provider has been selected at the aforementioned S5 and S2. When another provider has been specified, a transmission request for this second provider connection procedure information is made to the host H by returning to S7, and the steps S8 to S10 are repeated. When no other provider has been specified (No at S10), the lines are disconnected (S11) and the processing is concluded.

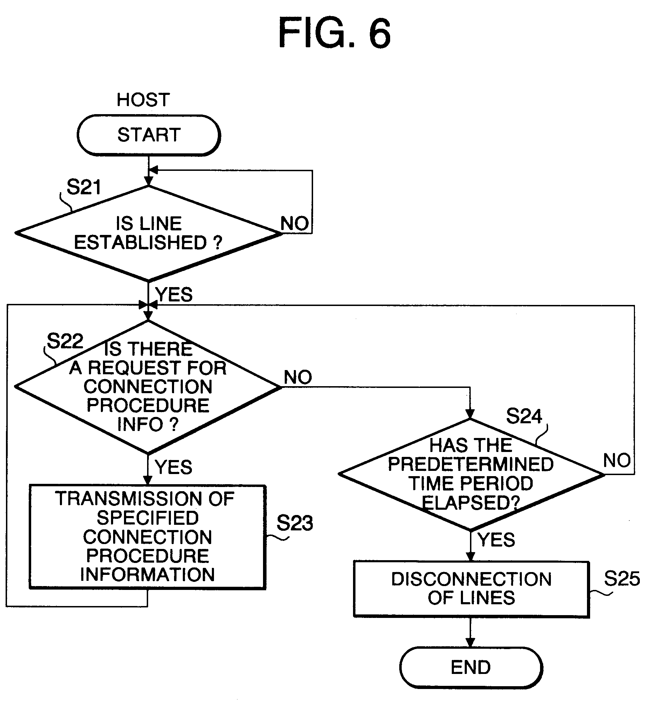

Next, the operations of the host H of the present embodiment will be described using the flow chart shown in Figure 6.

When a line is established (S21) based on a dialing from the communication terminal device T to the host H at S6 of Figure 5, a determination is performed of whether there is a transmission request for connection procedure information based on the NSC signal received from the communication terminal device T (S22). In this particular embodiment, presence or absence of a transmission request is determined by determining whether there is information in the received NSC signal which expresses the provider. When there has been a request for connection procedure information, the connection procedure information corresponding to the provider designated in the received NSC signal is read from the RAM 33 and transmitted to the communication terminal device T (S23). It should be noted that, as explained earlier, no password is included in this connection procedure information. Next, the processing is returned to S22 to determine whether there is a further transmission request for another connection procedure information. When there is no further reception of an NSC signal or when there is no information indicative of the provider in the NSC signal, it is determined that there is no further transmission request for connection procedure information. Then, a determination is performed of whether a predetermined time period has elapsed or not after establishing a line at S21 or after S23 (S24). When a predetermined time period has elapsed, the lines are disconnected (S25) and this processing is concluded. If the predetermined time period has not elapsed, the processing returns to S22 to monitor arrival of a next request.

All or most of the steps shown in Figures 5 and 6 may be executed by one or more computers according various programs. These programs may be stored in a particular recording medium. Such a recording medium may be any suitable device which is able to record computer programs such as a readable semiconductor recording device, a recording medium of a magnetic recording device, a recording medium of a photo-magnetic recording device or the like. In actuality, the recording medium may be a floppy disk, hard disk, optical disk, magneto-optical disk, phase change disk, magnetic tape or the like. If a personal computer coupled with DSU is used as the communication terminal device of the invention, the necessary programs will be fed to the personal computer from the above-mentioned recording medium.

As described above, the following advantages are obtained from the present embodiment.
(1) The information relating to the procedures for contacting the provider is transmitted from the host H upon a request from the communication terminal device T and memorized in the rewritable RAM of the communication terminal device T. Due to this, the user does not have to perform an initial setting by himself, i.e., it is unnecessary to install data and information for the long-in procedure by himself. Further, there is no need for the user to reinstall the log-in procedure information by himself in spite of possible changes in the provider specifications, i.e., the user can cope with such changes by simply downloading this connection procedure information from the host H. Accordingly, the user himself does not need to perform any changes to the recorded information. Thus, the work associated with the long-in procedure information recording operations is significantly reduced.
(2) As a plurality of providers can be specified simultaneously and the connection procedure information of these providers can successively be obtained, the present invention is convenient for when there exists contracts with a plurality of providers.
(3) As no password is included in the connection procedure information transmitted from the host, there is no loss of user secrecy.
(4) As the connection procedure information for a plurality of providers can be memorized in the RAM 7, the present invention is convenient for when there exists contracts with a plurality of providers.
(5) The connection procedure information which the user deems necessary is selectively down-loaded and memorized in the RAM7. Due to this, there is no need to prememorize in the RAM 7 multiple connection procedure information including connection procedure information which the user does not deem to be necessary. Accordingly, the present invention may comprise a RAM 7 with a small memory capacity.

It should be noted that the aforementioned embodiment may be modified as follows and similar effects and advantages as the aforementioned embodiment may be obtained.
(a) A BMP (Bitmap) format, JPEG (Joint Photographic Experts Group) format, GIF format, EPS format, IFF format or PICT format or the like may be used instead of the TIFF format as an electronic mail data format.
(b) The host H may be provided with functions as a provider, the transmission request and reception of connection procedure information may be performed in the electric mail format at the communication terminal device T and the transmission of connection procedure information may also be performed in the electronic mail format may be performed at the host H. Alternatively, the exchange of information may be performed between the communication terminal device T and host H in accordance with a specific (or special) protocol.
(c) When a signal other than the transmission request for connection procedure information is transmitted from the communication terminal device T at S22 of Figure 6, the processing corresponding to that signal may be performed.
(d) Computer networks other than the internet may be used.
(e) The present invention may be applied to other types of communication terminal devices such as a normal personal computer not provided with facsimile communication functions. In such a case, the exchange of information may be performed between the communication terminal device T and host H in accordance with an electronic mail format or some other specific protocol.
(f) A timer 38 indicated by the double dotted line in Figure 4 may be arranged in the host H and the newest connection information may periodically be transmitted to the communication terminal device T from the host H. By this arrangement, the newest connection procedure information may always be provided to the user. The user is able to reliably log-in based on this latest connection procedure information. Alternatively, the latest information may automatically sent to the communication terminal device T immediately upon updating.
(g) The request for connection procedure information at S7 of Figure 5 may be carried out simultaneously for all the providers selected at S2 of Figure 5. Furthermore, the host H may be arranged such that it transmits the requested connection procedure information of all the providers to the communication terminal device T simultaneously.

## Claims

1. A communication terminal device (T) connected with a connection procedure information source (H) and capable of communicating with a remote terminal over a computer communication network based on connection procedure information, characterized in that the device (T) comprises:
reception means (1, 6, 9, 10, 11) for receiving from the connection procedure information source (H) connection procedure information relating to procedures for connection to the computer communication network;
rewritable memory means (7) for memorizing the received connection procedure information; and
means for connecting the communication terminal device (T) with the computer communication network based on the memorized connection procedure information (T1).

2. The communication terminal device (T) of claim 1, characterized in that the device (T) further includes request signal transmission means (25) for transmitting to the connection procedure information source (H) a signal requesting transmission of the connection procedure information, and wherein the reception means receives the connection procedure information transmitted in response to the request.

3. The communication terminal device of claim 1, characterized in that no password is included in the connection procedure information transmitted from the connection procedure information source (H).

4. For use with a communication terminal device (T), a method of communicating with a remote terminal over a communication network, the communication terminal device (T) being connected with a host (H) which holds newest connection procedure information relating to procedures for connection to the communication network, comprising the steps of:
providing a rewritable memory (7);
causing the communication terminal device (T) to request the host (H) transmission of connection procedure information;
causing the host (H) to transmit the connection procedure information to the communication terminal device (T) in response to the request; and
causing the communication terminal device (T) to receive the connection procedure information and to store it in the rewritable memory (7).

5. The communication method of claim 4, characterized in that no password is included in the connection procedure information transmitted from the host (H).

6. A method of installing connection procedure information into a communication terminal device (T), connection procedure information being necessary for the communication terminal device (T) to communicate with a remote terminal over a computer network, characterized in that the method comprises the steps of:
A) providing an information source (H);
B) storing connection procedure information in the information source (H);
C) updating the connection procedure information in the information source (H) if updated;
D) causing the information source (H) to send the connection procedure information to the communication terminal device (T); and
E) causing the communication terminal device (T) to receive the connection procedure information and install it.

7. The method of claim 6, characterized in that the method further includes the step of excluding a password from the connection procedure information sent to the communication terminal device (T) from the information source (H) if the password is included in the connection procedure information.

8. The method of claim 6, characterized in that the method further includes the step of causing the communication terminal device (T) to send a request to the information source (H) between the steps C and D, and wherein the step D is performed upon the request.

9. The method of claim 6, characterized in that the step D is performed periodically.

10. The method of claim 6, characterized in that the step D is performed immediately after the step C.
